# EUROPÄISCHE PATENTSCHRIFT

(11) **EP 1 923 445 B1**
(45) Veröffentlichungstag und Bekanntmachung des Hinweises auf die Patenterteilung: **24.06.2009**
(21) Anmeldenummer: 06124348.1
(22) Anmeldetag: 17.11.2006
(51) Int. Cl.: C09J 175/00, C08G 18/12, C08G 18/42, C08G 18/76

(54) **Polyaldimin enthaltende feuchtigkeitshärtende Heissschmelzklebstoff-Zusammensetzung**
Polyaldimine containing moisture curable hotmelt adhesive composition
Composition adhésive thermofusible réticulable à l'humidité contenant un polyaldimine

(43) Veröffentlichungstag der Anmeldung: 21.05.2008
(73) Patentinhaber: Sika Technology AG, 6340 Baar (CH)
(72) Erfinder: Burckhardt, Urs, 8049, Zürich (CH); Paschkowski, Kai, 21635, Jork (DE); Linnenbrink, Martin, 21641, Apensen (DE); Krause, Sven, 21037, Hamburg (DE)
(74) Vertreter: Sika Patent Attorneys

(56) Entgegenhaltungen:
- EP-A- 1 329 469
- EP-A2- 0 832 953
- WO-A-20/04013200
- JP-A- 6 093 242

## Beschreibung

### Technisches Gebiet

Die Erfindung betrifft das Gebiet der feuchtigkeitshärtenden Heissschmelzklebstoffe.

### Stand der Technik

Heissschmelzklebstoffe (Hotmelts) sind Klebstoffe, welche auf thermoplastischen Polymeren basieren. Diese Polymere sind bei Raumtemperatur fest, erweichen beim Erwärmen zu viskosen Flüssigkeiten und können somit als Schmelze appliziert werden. Im Unterschied zu den sogenannten Warmschmelzklebstoffen (Warmmelts), welche eine pastöse Konsistenz haben und bei leicht erhöhten Temperaturen, typischerweise im Bereich von 40 bis 80 °C, appliziert werden, erfolgt die Applikation der Heissschmelzklebstoffe bei Temperaturen ab 80 °C, typischerweise ab 85°C. Beim Abkühlen auf Raumtemperatur verfestigen sie sich unter gleichzeitigem Aufbau der Klebefestigkeit. Klassische Heissschmelzklebstoffe sind nicht-reaktive Klebstoffe. Bei Erwärmung erweichen oder schmelzen sie wieder, wodurch sie sich für einen Einsatz bei erhöhter Temperatur nicht eignen. Zudem neigen klassische Heissschmelzklebstoffe oft auch bei Temperaturen weit unterhalb des Erweichungspunkts zum Kriechen (kalter Fluss).

Diese Nachteile wurden bei den sogenannten reaktiven Heissschmelzklebstoffen durch das Einbringen von reaktiven, zur Vernetzung führenden Gruppen in die Polymerstruktur weitgehend behoben. Als reaktive Heissschmelzklebstoffe besonders geeignet sind Polyurethanzusammensetzungen, kurz auch PUR-RHM genannt. Diese bestehen üblicherweise aus Isocyanatgruppen aufweisenden Polyurethanpolymeren, die durch Umsetzung geeigneter Polyole mit einem Überschuss an Diisocyanaten erhalten werden. Nach ihrer Applikation bauen sie durch Abkühlen schnell eine hohe Klebefestigkeit auf und erhalten ihre Endeigenschaften, insbesondere Wärmestandfestigkeit und Beständigkeit gegenüber Umwelteinflüssen, durch die Nachvernetzung des Polyurethanpolymers infolge der Reaktion der Isocyanatgruppen mit Feuchtigkeit. Bedingt durch das bei der Vernetzungsreaktion entstehende Kohlendioxid-Gas besteht aber die Gefahr, dass im Klebstoff Blasen entstehen, die die Endfestigkeit und die Haftung zu den Substraten vermindern sowie, im Fall von sichtbaren Verklebungen, beispielsweise im Verpackungsbereich, die Ästhetik beeinträchtigen können. Zur Blasenbildung neigen insbesondere amorphe PUR-RHM, da die von der Oberfläche her entstehende Haut aus ausgehärtetem Klebstoff für Kohlendioxid äusserst undurchlässig ist. Gleichzeitig lässt die Haut auch kaum Feuchtigkeit in die tiefer liegenden, noch nicht ausgehärteten Klebstoffschichten eindringen, so dass die vollständige Vernetzung bei solchen Klebstoffen, insbesondere wenn in Schichtdicken von 500 Mikrometern oder mehr appliziert, überaus viel Zeit braucht oder gar nicht zustande kommt.

Im Gebiet der bei Raumtemperatur applizierten einkomponentigen Polyurethane sind blasenfrei aushärtende Systeme bekannt. Sie enthalten üblicherweise latente Härter, insbesondere Polyaldimine. WO 2004/013200 A1 beschreibt bei Raumtemperatur applizierbare, Polyaldimine enthaltende Zusammensetzungen, die ohne störenden Geruch aushärten.

### Darstellung der Erfindung

Aufgabe der vorliegenden Erfindung ist es, eine als reaktiver Heissschmelzklebstoff einsetzbare Polyurethanzusammensetzung zur Verfügung zu stellen, die lagerstabil ist und die auch bei dickschichtiger Anwendung ohne die Bildung von Blasen aushärtet. Zudem ist es das Ziel, dass die Vernetzung rasch und vollständig erfolgt und der Klebstoff über eine gute Endfestigkeit verfügt.

Überraschenderweise wurde gefunden, dass diese Aufgabe durch die feuchtigkeitsreaktive Heissschmelzklebstoff-Zusammensetzung gemäss Anspruch 1 gelöst werden kann. Es zeigte sich, dass die Geschwindigkeit der Vernetzung, welche im Wesentlichen im abgekühlten, d.h. festen, Zustand erfolgt, im Vergleich zu Zusammensetzungen, welche keine Polyaldimine enthalten, deutlich erhöht ist. Dies ist erstaunlich, da die Vernetzung von Isocyanatgruppen über Polyaldimine sogar mehr Wasser benötigt als die Vernetzung von Isocyanatgruppen über Wasser allein. Insbesondere stellte sich heraus, dass die Vernetzungsgeschwindigkeit bei amorphen Heissschmelzklebstoff-Zusammensetzungen besonders stark erhöht ist. Weiterhin zeigte sich erstaunlicherweise, dass die Heissschmelzklebstoff-Zusammensetzungen trotz der bei ihrer Applikation herrschenden hohen Temperaturen und der in der Zusammensetzung enthaltenen Polyaldimine, bzw. der bei der Hydrolyse daraus gebildeten Aldehyde, zum Grossteil geruchsfrei, bzw. zumindest geruchsarm, sind. Die vernetzten Klebstoffe weisen die Vorteile der Blasenfreiheit und einer guten Endfestigkeit auf.

In weiteren Aspekten betrifft die Erfindung ein Verfahren zur Verklebung gemäss Anspruch 17, die daraus resultierenden Artikel gemäss Anspruch 22 sowie ein Verfahren zur Reduktion der Blasenbildung und zur Beschleunigung der chemischen Vernetzung von amorphen feuchtigkeitsreaktiven Heissschmelzklebstoff-Zusammensetzungen gemäss Anspruch 24.

Bevorzugte Ausführungsformen sind Gegenstand der abhängigen Ansprüche.

### Wege zur Ausführung der Erfindung

Gegenstand der vorliegenden Erfindung sind feuchtigkeitsreaktive Heissschmelzklebstoff-Zusammensetzungen, umfassend
a) mindestens ein bei Raumtemperatur festes, Isocyanatgruppen aufweisendes Polyurethanpolymer **P,**
b) mindestens ein Polyaldimin **ALD** der Formel (I a) oder (I b), 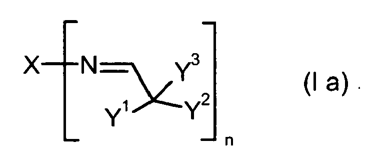 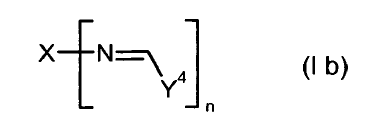 wobei in Formel (I a) oder (I b)
   X für den organischen Rest eines n-funktionellen primären Polyamins nach Entfernung von n aliphatischen primären Aminogruppen steht, wobei dieser organische Rest keine Gruppierungen aufweist, die in Abwesenheit von Wasser mit Isocyanatgruppen reaktionsfähig sind, insbesondere keine Hydroxylgruppen, keine sekundären Aminogruppen, keine Harnstoffgruppen und keine anderen Gruppen mit aktivem Wasserstoff;
   n für 2 oder 3 oder 4 steht;
   - Y¹ und Y²: entweder unabhängig voneinander
   jeweils für einen einwertigen Kohlenwasserstoffrest mit 1 bis 12 C-Atomen stehen,
   oder zusammen für einen zweiwertigen Kohlenwasserstoffrest mit 4 bis 20 C-Atomen, der Teil eines, gegebenenfalls substituierten,
   carbocyclischen Rings mit 5 bis 8, bevorzugt 6, C-Atomen, ist, stehen;
   - Y³: für einen einwertigen Kohlenwasserstoffrest steht, welcher gegebenenfalls mindestens ein Heteroatom, insbesondere Sauerstoff in Form von Ether-, Carbonyl- oder Ester-Gruppen, aufweist;
   - Y⁴ entweder: für eine substituierte oder unsubstituierte Aryl- oder Heteroaryl-Gruppe, welche eine Ringgrösse zwischen 5 und 8, bevorzugt 6, Atomen aufweist, steht
   oder für 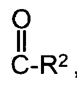 wobei R² für ein Wasserstoffatom oder für eine Alkoxygruppe, steht,
   oder für eine substituierte oder unsubstituierte Alkenyl- oder Arylalkenylgruppe mit mindestens 6 C-Atomen steht;
c) mindestens eine Säure **K** in Form einer organischen Monocarbonsäure oder Dicarbonsäure oder einer organischen Monosulfonsäure oder Disulfonsäure oder einer zu einer dieser Säuren hydrolysierbaren Verbindung.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Düsocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Raumtemperatur" wird eine Temperatur von 25 °C bezeichnet.

Mit "Poly" beginnende Substanznamen wie Polyaldimin, Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Die feuchtigkeitsreaktive Heissschmelzklebstoff-Zusammensetzung umfasst mindestens ein bei Raumtemperatur festes, Isocyanatgruppen aufweisendes Polyurethanpolymer **P.**

Ein geeignetes Polyurethanpolymer **P** ist erhältlich durch die Umsetzung von mindestens einem Polyol mit mindestens einem Polyisocyanat.

Als Polyole geeignet sind insbesondere Polyetherpolyole, Polyesterpolyole und Polycarbonatpolyole, sowie Mischungen dieser Polyole.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter ,Molekulargewicht' oder ,Molgewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim^{®} von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole geeignet sind mindestens zwei Hydroxylgruppen tragende Polyester, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.

Die Polyesterpolyole weisen vorteilhaft ein Molekulargewicht von 1000 bis 15'000 g/mol, insbesondere von 1500 bis 8000 g/mol, insbesondere von 1700 bis 5500 g/mol, auf.

Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0 °C und 25 °C, und werden vorzugsweise in Kombination mit mindestens einem amorphen, teilkristallinen oder kristallinen Polyesterpolyol eingesetzt. Besonders geeignet sind amorphe Polyesterdiole, sowie Mischungen aus amorphen und bei Raumtemperatur flüssigen Polyesterdiolen.

Als Polycarbonatpolyole geeignet sind jene, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole, insbesondere amorphe Polycarbonatdiole.

Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.

Als Polyole bevorzugt sind Polyesterpolyole und Polycarbonatpolyole, insbesondere Polyesterdiole und Polycarbonatdiole.

Besonders bevorzugt sind amorphe Polyesterdiole und amorphe Polycarbonatdiole, sowie Mischungen aus amorphen und bei Raumtemperatur flüssigen Polyester- oder Polycarbonatdiolen.

Am meisten bevorzugt sind Polyesterdiole, insbesondere amorphe Polyesterdiole, sowie Mischungen aus amorphen und bei Raumtemperatur flüssigen Polyesterdiolen.

Als Polyisocyanate für die Herstellung eines Polyurethanpolymers P können handelsübliche aliphatische, cycloaliphatische oder aromatische Polyisocyanate, insbesondere Diisocyanate, verwendet werden, beispielsweise die folgenden:

1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten Isocyanate. Bevorzugt sind MDI, TDI, HDI und IPDI. Besonders bevorzugt sind MDI und IPDI.

Die Herstellung des Polyurethanpolymers **P** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer **P** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2.

Das Polyurethanpolymer **P** ist bei Raumtemperatur fest. Es kann dabei kristallin, teilkristallin oder amorph sein. Für ein teilkristallines oder amorphes Polyurethanpolymer P gilt dabei, dass es bei Raumtemperatur nicht oder nur wenig fliessfähig ist, das heisst insbesondere, dass es bei 20 °C eine Viskosität von mehr als 5'000 Pa.s aufweist.

Das Polyurethanpolymer **P** weist ein Molekulargewicht von vorzugsweise über 1000 g/mol, insbesondere ein solches zwischen 1200 und 50'000 g/mol, bevorzugt ein solches zwischen 2000 und 30'000 g/mol, auf.

Weiterhin weist das Polyurethanpolymer **P** bevorzugt eine mittlere Funktionalität im Bereich von 1.8 bis 2.2 auf.

Bevorzugt ist das bei Raumtemperatur feste Polyurethanpolymer **P** transparent. Typischerweise werden zur Herstellung eines transparenten, bei Raumtemperatur festen Polyurethanpolymers entweder amorphe Polyole oder eine Mischung von bei Raumtemperatur flüssigen und amorphen Polyolen verwendet.

Vorzugsweise das Polyurethanpolymer **P** amorph. Weiter ist das Polyurethanpolymer **P** vorzugsweise transparent, sowohl vor als auch nach dem chemischen Vernetzen mit Feuchtigkeit.

Üblicherweise ist das Polyurethanpolymer **P** in einer Menge von 40 - 100 Gewichts-%, insbesondere von 75 - 100 Gewichts-%, bevorzugt von 80 - 100 Gewichts-%, bezogen auf die gesamte feuchtigkeitsreaktive Heissschmelzklebstoff-Zusammensetzung, vorhanden.

Die feuchtigkeitsreaktive Heissschmelzklebstoff-Zusammensetzung enthält neben dem bei Raumtemperatur festen, Isocyanatgruppen aufweisenden Polyurethanpolymer **P** ein Polyaldimin **ALD** der Formel (I a) oder (Ib), 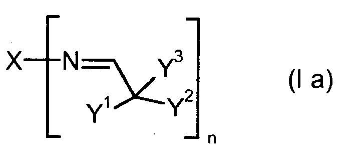 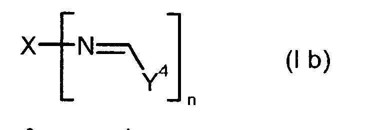 wobei X, n, Y¹, Y², Y³ und Y⁴ die bereits erwähnten Bedeutungen aufweisen.

Bevorzugt steht X für einen Kohlenwasserstoffrest, welcher gegebenenfalls substituiert ist, und welcher gegebenenfalls Heteroatome enthält, insbesondere in Form von Ether-Sauerstoff, tertiärem Amin-Stickstoff oder Thioether-Schwefel.

Bevorzugt steht n für 2 oder 3, insbesondere für 2.

Bevorzugt stehen Y¹ und Y² jeweils für eine Methylgruppe.

Bevorzugt steht Y³ für einen Rest der Formel (II) oder (III), 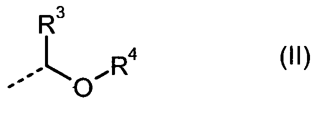 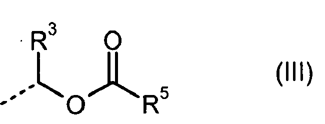 wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 12 bis 30, C-Atomen, der gegebenenfalls Heteroatome enthält, steht;
und
R⁵ entweder
für ein Wasserstoffatom steht,
oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder für einen einfach oder mehrfach ungesättigten, linearen oder verzweigten Kohlenwasserstoffrest mit 5 bis 30 C-Atomen steht,
oder für einen, gegebenenfalls substituierten, aromatischen
oder heteroaromatischen, 5- oder 6-gliedrigen Ring steht.

Die gestrichelten Linien in den Formeln in diesem Dokument stellen jeweils die Bindung zwischen einem Substituenten und dem zugehörigen Molekülrest dar.

Ein Polyaldimin **ALD** der Formel (I a) oder (I b) ist erhältlich durch eine Kondensationsreaktion unter Abspaltung von Wasser zwischen einem Polyamin der Formel (IV) und einem Aldehyd der Formel (V a) oder (V b). Der Aldehyd der Formel (V a) oder (V b) wird hierbei in Bezug auf die Aminogruppen des Polyamins der Formel (IV) stöchiometrisch oder im stöchiometrischen Überschuss 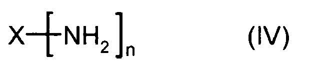 eingesetzt.

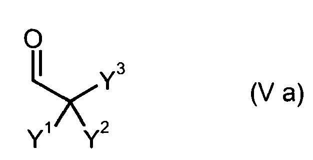

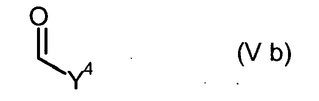

In den Formeln (IV), (V a) und (V b) weisen X, n und Y¹, Y², Y³ und Y⁴ die bereits erwähnten Bedeutungen auf.

Geeignete Polyamine der Formel (IV) sind Polyamine mit aliphatischen primären Aminogruppen, beispielsweise die folgenden: Aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclo-hexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo-[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, beispielsweise erhältlich unter dem Namen Jeffamine® (von Huntsman Chemicals), unter dem Namen Polyetheramin (von BASF) oder unter dem Namen PC Amine^{®} (von Nitroil), sowie Mischungen der vorgenannten Polyamine.

Als Polyamine der Formel (IV) bevorzugt sind Polyamine, welche ausgewählt sind aus der Gruppe bestehend aus 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,4-Diamino-2,2,6-trimethylcyclohexan und Polyoxyalkylen-Polyamine mit zwei oder drei Aminogruppen, insbesondere die unter dem Handelsnamen Jeffamine® erhältlichen Typen EDR-148, D-230, D-400, D-2000, T-403 und T-5000 von Huntsman und dazu analoge Verbindungen von BASF oder Nitroil, sowie deren Mischungen untereinander.

Zur Herstellung eines Polyaldimins **ALD** der Formel (I a) oder (I b) werden Aldehyde der Formel (V a) oder (V b) verwendet. Diese Aldehyde haben die Eigenschaft, dass ihre Reste Y¹, Y², Y³ und Y⁴ keine Gruppierungen aufweisen, die in Abwesenheit von Wasser mit Isocyanatgruppen reaktionsfähig sind; insbesondere weisen Y¹, Y², Y³ und Y⁴ keine Hydroxylgruppen, keine primären oder sekundären Aminogruppen, keine Harnstoffgruppen und keine anderen Gruppen mit aktivem Wasserstoff auf.

Zur Herstellung eines Polyaldimins **ALD** sind erstens Aldehyde der Formel (V a) geeignet, wobei Y¹, Y² und Y³ die bereits genannten Bedeutungen aufweisen.

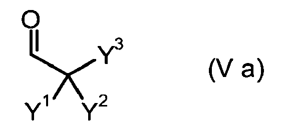

Aldehyde der Formel (V a) sind tertiäre aliphatische oder tertiäre cycloaliphatische Aldehyde, wie beispielsweise Pivalaldehyd (= 2,2-Dimethylpropanal), 2,2-Dimethyl-butanal, 2,2-Diethyl-butanal, 1-Methyl-cyclopentancarboxaldehyd, 1-Methyl-cyclohexancarboxaldehyd; sowie Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Besonders geeignete Aldehyde der Formel (V a) sind in einer ersten Ausführungsform Aldehyde der Formel (VI), das heisst, Aldehyde der Formel (V a) mit dem Rest Y³ der Formel (II) 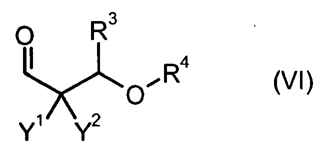 wobei
R³ für ein Wasserstoffatom oder für eine Alkyl- oder Arylalkylgruppe steht,
R⁴ für einen Kohlenwasserstoffrest mit 1 bis 30 C-Atomen, der gegebenenfalls Heteroatome enthält, steht, und
Y¹ und Y² die bereits genannten Bedeutungen aufweisen.

In Formel (VI) stehen Y¹ und Y² jeweils bevorzugt für eine Methylgruppe, und R³ steht bevorzugt für ein Wasserstoffatom.

Aldehyde der Formel (VI) stellen Ether von aliphatischen, araliphatischen oder cycloaliphatischen 2,2-disubstituierten 3-Hydroxyaldehyden mit Alkoholen der Formel HO-R⁴ dar, beispielsweise Fettalkoholen. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären cycloaliphatischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd.

Als Beispiele solcher Aldehyde der Formel (VI) genannt werden sollen 2,2-Dimethyl-3-(2-ethylhexyloxy)-propanal, 2,2-Dimethyl-3-lauroxy-propanal und 2,2-Dimethyl-3-stearoxy-propanal.

In einer zweiten Ausführungsform sind besonders geeignete Aldehyde der Formel (V a) Aldehyde der Formel (VII), das heisst, Aldehyde der Formel (V a) mit dem Rest Y³ der Formel (III). 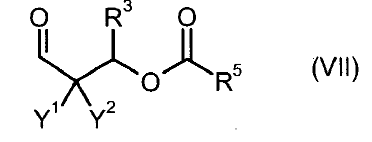 In Formel (VII) steht
R³ für ein Wasserstoffatom oder für eine Alkyl- oder Arylalkylgruppe;
R⁵ steht entweder
für ein Wasserstoffatom,
oder für einen linearen oder verzweigten Alkylrest mit 1 bis 30 C-Atomen, gegebenenfalls mit cyclischen Anteilen und gegebenenfalls mit mindestens einem Heteroatom,
oder für einen einfach oder mehrfach ungesättigten, linearen oder verzweigten Kohlenwasserstoffrest mit 5 bis 30 C-Atomen,
oder für einen, gegebenenfalls substituierten, aromatischen oder heteroaromatischen, 5- oder 6-gliedrigen Ring;
und Y¹ und Y² weisen die bereits genannten Bedeutungen auf.

In Formel (VII) stehen Y¹ und Y² jeweils bevorzugt für eine Methylgruppe, und R³ steht bevorzugt für ein Wasserstoffatom.

Verbindungen der Formel (VII) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.

Beispiele für geeignete Carbonsäuren sind zum einen aliphatische Carbonsäuren, wie Ameisensäure, Essigsäure, Propionsäure, Buttersäure, Isobuttersäure, Valeriansäure, Capronsäure, 2-Ethyl-capronsäure, Caprinsäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl-oder tert.-Butyl- oder Methoxy- oder Nitrobenzoesäuren.

Bevorzugte Aldehyde der Formel (VII) sind 2,2-Dimethyl-3-lauroyloxy-propanal, 2,2-Dimethyl-3-myristoyloxypropanal 2,2-Dimethyl-3-palmitoyloxy-propanal, 2,2-Dimethyl-3-stearoyloxy-propanal und 2,2-Dimethyl-3-benzoyloxy-propanal, sowie analoge Ester anderer 2,2-disubstituierter 3-Hydroxyaldehyde.

In einer besonders bevorzugten Ausführungsform ist R⁵ ausgewählt aus der Gruppe bestehend aus Phenyl und den C₁₁-, C₁₃-, C₁₅- und C₁₇-Alkylgruppen.

Als Aldehyd der Formel (VII) besonders bevorzugt ist 2,2-Dimethyl-3-lauroyloxypropanal.

In einer bevorzugten Herstellmethode des Aldehyds der Formel (VII) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

In einer besonders bevorzugten Ausführungsform ist der Aldehyd der Formel (V a) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde der Formel (V a) sind einerseits insbesondere Aldehyde der Formel (VI), in welchen der Rest R⁴ für einen Kohlenwasserstoffrest mit 12 bis 30 C-Atomen, der gegebenenfalls Heteroatome enthält, steht.

Andererseits sind geruchsfreie Aldehyde der Formel (V a) insbesondere Aldehyde der Formel (VII), in welchen der Rest R⁵ entweder für eine lineare oder verzweigte Alkylgruppe mit 11 bis 30 Kohlenstoff-Atomen, gegebenenfalls mit cyclischen Anteilen, und gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht.

Beispiele für geruchsfreie Aldehyde der Formel (VII) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (VII) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Zur Herstellung eines Polyaldimins **ALD** sind zweitens Aldehyde der Formel (V b) geeignet, 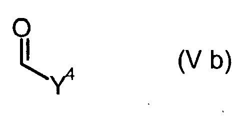 wobei Y⁴ entweder
für eine substituierte oder unsubstituierte Aryl- oder Heteroaryl-Gruppe steht, welche eine Ringgrösse zwischen 5 und 8, bevorzugt 6, Atomen aufweist,
oder für 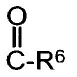 steht, wobei R⁶ für ein Wasserstoffatom oder für eine Alkoxygruppe steht,
oder für eine substituierte oder unsubstituierte Alkenyl- oder Arylalkenylgruppe mit mindestens 6 C-Atomen steht.

Geeignete Aldehyde der Formel (V b) sind aromatische Aldehyde, wie beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd.

Geeignete Aldehyde der Formel (V b) sind weiterhin Glyoxal, Glyoxalsäureester, beispielsweise Glyoxalsäuremethylester, Zimtaldehyd und substituierte Zimtaldehyde.

Die Polyaldimine **ALD** der Formel (I a) mit aliphatischen Aldimingruppen und die Polyaldimine **ALD** der Formel (I b) mit aromatischen Aldimingruppen haben die Eigenschaft, dass ihre Aldimingruppen nicht zu Enamingruppen tautomerisieren können, da sie als Substituenten in α-Stellung zum C-Atom der Aldimingruppe keinen Wasserstoff enthalten. Aufgrund dieser Eigenschaft bilden sie zusammen mit Isocyanatgruppen enthaltenden Polyurethanpolymeren **P** besonders lagerfähige, das heisst weitgehend viskositätsstabile, Mischungen, auch wenn hochreaktive aromatische Isocyanatgruppen wie diejenigen von TDI und MDI vorhanden sind.

Polyaldimine **ALD**, welche ausgehend von geruchsfreien Aldehyden der vorgängig beschriebenen besonders bevorzugten Ausführungsform hergestellt sind, sind geruchsfrei. Solche geruchsfreien Polyaldimine **ALD** sind besonders bevorzugt.

Als Polyaldimine **ALD** sind diejenigen, welche die Formel (I a) aufweisen, bevorzugt.

Die Polyaldimine **ALD** sind unter geeigneten Bedingungen, insbesondere unter Ausschluss von Feuchtigkeit, lagerstabil. Bei Zutritt von Feuchtigkeit können ihre Aldimingruppen über Zwischenstufen formal zu Aminogruppen hydrolysieren, wobei der entsprechende, zur Herstellung des Aldimins verwendete Aldehyd der Formel (V a) oder (V b) freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldimingruppen teilweise oder ganz hydrolysieren.

In Gegenwart von Isocyanatgruppen reagieren die hydrolysierenden Aldimingruppen mit den Isocyanatgruppen zu Harnstoffgruppen. Die Reaktion der Isocyanatgruppen mit den hydrolysierenden Aldimingruppen muss dabei nicht notwendigerweise über freie Aminogruppen erfolgen. Selbstverständlich sind auch Reaktionen mit Zwischenstufen der Hydrolysereaktion möglich. Beispielsweise ist es denkbar, dass eine hydrolysierende Aldimingruppe in der Form eines Halbaminals direkt mit einer Isocyanatgruppe reagiert.

Ein Polyaldimin **ALD** ist in der feuchtigkeitsreaktiven Heissschmelzklebstoff-Zusammensetzung bevorzugt in einer leicht überstöchimetrischen, stöchiometrischen oder unterstöchiometrischen Menge bezogen auf alle freien Isocyanatgruppen vorhanden. Vorteilhaft beträgt das Verhältnis zwischen Aldimingruppen und Isocyanatgruppen 0.1 bis 1.1, insbesondere 0.15 bis 1.0, besonders bevorzugt 0.2 bis 0.9, Equivalent Aldimingruppen pro Equivalent Isocyanatgruppen.

Als Polyaldimin **ALD** können auch Mischungen verschiedener Polyaldimine **ALD** verwendet werden. Insbesondere können Mischungen verschiedener Polyamine **ALD** eingesetzt werden, welche ausgehend von Mischungen verschiedener Polyamine der Formel (IV) und/oder Mischungen verschiedener Aldehyde der Formel (V a) oder (V b) hergestellt wurden. Es kann insbesondere vorteilhaft sein, als Polyaldimin **ALD** Mischungen von Polyaldiminen **ALD** zu verwenden, welche ausgehend von Mischungen bestehend aus Di- und Triaminen der Formel (IV) hergestellt wurden.

Die feuchtigkeitsreaktive Heissschmelzklebstoff-Zusammensetzung enthält neben dem bei Raumtemperatur festen, Isocyanatgruppen aufweisenden Polyurethanpolymer **P** und dem Polyaldimin **ALD** der Formel (I a) oder (I b) zusätzlich mindestens eine Säure **K** in Form einer organischen Mono- oder Dicarbonsäure oder einer organischen Mono- oder Disulfonsäure oder einer zu einer dieser Säuren hydrolysierbaren Verbindung.

In einer ersten Ausführungsform stellt die Säure **K** eine organische Mono- oder Dicarbonsäure oder eine zu einer organischen Mono- oder Dicarbonsäure hydrolysierbare Verbindung dar, beispielsweise ausgewählt aus
- gesättigten aliphatischen Monocarbonsäuren wie Ameisensäure, Essigsäure, Propionsäure, Buttersäure, Isobuttersäure, Valeriansäure, Isovaleriansäure, Pivalinsäure, Capronsäure, Oenanthsäure, Caprylsäure, 2-Ethylhexansäure, Pelargonsäure, Caprinsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure und Behensäure;
- gesättigten aliphatischen Dicarbonsäuren wie Oxalsäure, Malonsäure, Bernsteinsäure, Glutarsäure, Adipinsäure, Pimelinsäure, Korksäure, Azelainsäure, Sebacinsäure und Dodecandisäure;
- einfach oder mehrfach ungesättigten aliphatischen Mono- oder Dicarbonsäuren wie Palmitoleinsäure, Ölsäure, Erucasäure, Sorbinsäure, Linolsäure, Linolensäure, Elaeostearinsäure, Ricinolsäure, Ricinensäure, Maleinsäure, Fumarsäure und Sorbinsäure;
- cycloaliphatischen Mono- oder Dicarbonsäuren wie Cyclohexancarbonsäure, Hexahydrophthalsäure, Tetrahydrophthalsäure, Harzsäuren und Naphthensäuren;
- halogenierten aliphatischen Mono- oder Dicarbonsäuren wie Trichloressigsäure und 2-Chlorpropionsäure;
- aromatischen Mono- oder Dicarbonsäuren wie Benzoesäure, Salicylsäure, Gallussäure, Phthalsäure, Terephthalsäure, Isophthalsäure und die stellungsisomeren Tolylsäuren, Methoxybenzoesäuren, Chlorbenzoesäuren und Nitrobenzoesäuren;
- technischen Carbonsäure-Gemischen wie zum Beispiel Versatic^{®}-Säuren;
- Carbonsäureanhydriden wie Phthalsäureanhydrid und Hexahydrophthalsäureanhydrid;
- Silylester der genannten organischen Carbonsäuren, beispielsweise Siliciumtetraacetat, Trimethylsilylacetat, Triacetoxyethylacetat, Laurinsäuretrimethylsilylester und Benzoesäuretrimethylsilylester.

In einer zweiten Ausführungsform stellt die Säure **K** eine organische Mono- oder Disulfonsäure oder eine zu einer organischen Mono- oder Disulfonsäure hydrolysierbare Verbindung dar, beispielsweise ausgewählt aus
- aliphatischen oder aromatischen Mono- und Disulfonsäuren wie Methylsulfonsäure, Vinylsulfonsäure, Butylsulfonsäure, Sulfoessigsäure, Benzolsulfonsäure, die stellungsisomeren Benzoldisulfonsäuren, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalindisulfonsäure;
- Alkyl- oder Silylestern der genannten Mono- oder Disulfonsäuren, beispielsweise p-Toluolsulfonsäuremethylester, Ethylenglykol-bis-p-toluolsulfonat, Trimethylsilyl-methansulfonat und Benzolsulfonsäuretrimethylsilylester;
- Sultonen und Anhydriden, beispielsweise 1,4-Butansulton und 2-Sulfobenzoesäureanhydrid.

Bei der Säure **K** kann es sich auch um Mischungen aus zwei oder mehr der genannten Säuren oder zu diesen Säuren hydrolysierbaren Verbindungen handeln.

Als Säure **K** bevorzugt sind aromatische Monocarbonsäuren, insbesondere Benzoesäure, Salicylsäure und 2-Nitrobenzoesäure.

Üblicherweise ist die Säure **K** in einer Menge von 0.001 bis 5 Gewichts-%, bevorzugt 0.005 bis 2 Gewichts-%, bezogen auf die gesamte feuchtigkeitsreaktive Heissschmelzklebstoff-Zusammensetzung, vorhanden.

Die Säure **K** hat eine katalytische Wirkung auf die Hydrolyse des Polyaldimins **ALD**, was die chemische Vernetzung der feuchtigkeitsreaktiven Heissschmelzklebstoff-Zusammensetzung beschleunigt.

Die vorgängig beschriebene feuchtigkeitsreaktive Heissschmelzklebstoff-Zusammensetzung enthält gegebenenfalls weitere Bestandteile, wie sie nach dem Stand der Technik üblicherweise eingesetzt werden. Dem Fachmann ist dabei klar, dass solche weiteren Bestandteile in Abhängigkeit der jeweiligen Zusammensetzung und in ihrer Art und Menge so zu wählen sind, dass trotz ihrer Anwesenheit die Lagerstabilität der Zusammensetzung gegeben ist.

Gegebenenfalls enthält die vorgängig beschriebene feuchtigkeitsreaktive Heissschmelzklebstoff-Zusammensetzung nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat. Besonders geeignet sind Ethylenvinylacetat-Copolymere (EVA), ataktische Poly-α-Olefine (APAO), Polypropylene (PP) und Polyethylene (PE).

Gegebenenfalls enthält die beschriebene feuchtigkeitsreaktive Heissschmelzklebstoff-Zusammensetzung Katalysatoren für die Reaktion der Isocyanatgruppen, wie Metallverbindungen oder tertiäre Amine.

Geeignete Metallverbindungen sind beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid, Dibutylzinnoxid, Zinn(II)-carboxylate; Stannoxane wie Laurylstannoxan; Bismutverbindungen wie Bismut(III)-octoat, Bismut(III)-neodecanoat oder Bismut(III)-oxinate.

Geeignete tertiäre Amine sind beispielsweise 2,2'-Dimorpholinodiethylether und andere Morpholinether-Derivate, 1,4-Diazabicyclo[2.2.2]octan und 1,8-Diazabicyclo[5.4.0]undec-7-en.

Ebenso kann die feuchtigkeitsreaktive Heissschmelzklebstoff-Zusammensetzung Mischungen der genannten Katalysatoren enthalten. Besonders geeignet sind Mischungen von Metallverbindungen und tertiäre Amine.

Gegebenenfalls enthält die vorgängig beschriebene feuchtigkeitsreaktive Heissschmelzklebstoff-Zusammensetzung Reaktivverdünner oder Vernetzer, beispielsweise Oligomere oder Polymere von Diisocyanaten wie MDI, PMDI, TDI, HDI, 1, 12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Polyisocyanaten mit kurzkettigen Polyolen, sowie Adipinsäure-dihydrazid und andere Dihydrazide, sowie weitere Polyaldimine, insbesondere solche, welche aus der Umsetzung von Polyaminen der Formel (IV) mit Dialdehyden erhalten werden.

Weiterhin kann die vorgängig beschriebene feuchtigkeitsreaktive Heissschmelzklebstoff-Zusammensetzung andere Zusätze enthalten, wie insbesondere Füllstoffe, Weichmacher, Haftvermittler, insbesondere Silangruppen enthaltende Verbindungen, UV-Absorptionsmittel, UV- oder Wärmestabilisatoren, Antioxidantien, Flammschutzmittel, optische Aufheller, Pigmente, Farbstoffe und Trocknungsmittel, sowie weitere üblicherweise in isocyanathaltigen Zusammensetzungen eingesetzte Substanzen.

In einer bevorzugten Ausführungsform ist die vorgängig beschriebene feuchtigkeitsreaktive Heissschmelzklebstoff-Zusammensetzung frei von Russ.

In einer weiteren bevorzugten Ausführungsform ist die vorgängig beschriebene feuchtigkeitsreaktive Heissschmelzklebstoff-Zusammensetzung ganz frei von Füllstoffen.

In einer besonders bevorzugten Ausführungsform ist die vorgängig beschriebene feuchtigkeitsreaktive Heissschmelzklebstoff-Zusammensetzung transparent. Insbesondere ist sie sowohl vor als auch nach dem chemischen Vernetzen mit Feuchtigkeit transparent. Eine solche Zusammensetzung ist besonders geeignet für die Verklebung von Substraten, bei der zumindest eines der zu verklebenden Substrate durchsichtig oder durchscheinend ist.

Die vorgängig beschriebene feuchtigkeitsreaktive Heissschmelzklebstoff-Zusammensetzung wird unter Ausschluss von Feuchtigkeit hergestellt und aufbewahrt. In einer geeigneten, klimadichten Verpackung oder Anordnung, wie beispielsweise in einem Fass, einem Beutel oder einer Kartusche, verfügt sie über eine hervorragende Lagerstabilität. Mit den Begriffen "lagerstabil" und "Lagerstabilität" in Zusammenhang mit einer Zusammensetzung wird im vorliegenden Dokument der Sachverhalt bezeichnet, dass die Viskosität der Zusammensetzung bei der Applikationstemperatur bei geeigneter Lagerung in der betrachteten Zeitspanne nicht oder höchstens so stark ansteigt, dass die Zusammensetzung auf die vorgesehene Weise verwendbar bleibt.

Für die Wirkungsweise eines reaktiven Heissschmelzklebstoffes ist es wichtig, dass der Klebstoff aufschmelzbar ist, das heisst, dass er bei der Applikationstemperatur eine genügend niedrige Viskosität aufweist, um applizierbar zu sein, und dass er beim Erkalten möglichst schnell eine genügende Klebefestigkeit aufbaut, schon bevor die Vernetzungsreaktion mit Luftfeuchtigkeit abgeschlossen ist (Anfangsfestigkeit). Es hat sich gezeigt, dass die beschriebenen Zusammensetzungen bei der Applikationstemperatur, welche für Heissschmelzklebstoffe im Bereich von 80 °C bis 200 °C, typischerweise von 120 °C bis 160 °C, liegt, eine gut handhabbare Viskosität aufweisen, und dass sie beim Erkalten genügend schnell eine gute Klebefestigkeit aufbauen. Als gut handhabbare Viskosität wird insbesondere eine Viskosität von 1 - 50 Pas verstanden.

Bei der Applikation kommt die vorgängig beschriebene feuchtigkeitsreaktive Heissschmelzklebstoff-Zusammensetzung in Kontakt mit Feuchtigkeit, insbesondere in Form von Luftfeuchtigkeit. Parallel zur physikalischen Erhärtung infolge Erstarren beim Abkühlen setzt auch die chemische Vernetzung mit Feuchtigkeit ein, hauptsächlich indem die vorhandenen Aldimingruppen durch Feuchtigkeit hydrolysiert werden und in der bereits beschriebenen Weise schnell mit vorhandenen Isocyanatgruppen reagieren. Überschüssige Isocyanatgruppen vernetzen ebenfalls mit Feuchtigkeit in bekannter Weise.

Mit den Begriffen "Vernetzung", "chemische Vernetzung", "Vernetzungsreaktion" wird im gesamten Dokument der durch die chemische Reaktion von Isocyanatgruppen ausgelöste Prozess der Entstehung von hochmolekularen Polyurethan-Kunststoffen bezeichnet, auch dann, wenn dabei kein kovalent verbundenes Netzwerk entsteht. Ist die Vernetzungsreaktion in einer feuchtigkeitsreaktiven Heissschmelzklebstoff-Zusammensetzung durch die ganze Masse fortgeschritten, spricht man auch von "Durchhärtung".

Die für die Vernetzung benötigte Feuchtigkeit kann entweder aus der Luft stammen (Luftfeuchtigkeit), oder aber die Zusammensetzung kann mit einer Wasser enthaltenden Komponente in Kontakt gebracht werden, zum Beispiel durch Bestreichen oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die vorgängig beschriebene feuchtigkeitsreaktive Heissschmelzklebstoff-Zusammensetzung zeigt bei der Vernetzung mit Feuchtigkeit eine stark verminderte Tendenz zur Bildung von Blasen, da bei der Vernetzungsreaktion durch das Vorhandensein von Aldimingruppen - je nach Stöchiometrie - weniger oder gar kein Kohlendioxid gebildet wird.

Des Weiteren zeigt die vorgängig beschriebene feuchtigkeitsreaktive Heissschmelzklebstoff-Zusammensetzung eine relativ schnelle chemische Vernetzung, auch wenn die Zusammensetzung amorph ist und/oder dickschichtig appliziert wurde.

In einer bevorzugten Ausführungsform ist die vorgängig beschriebene feuchtigkeitsreaktive Heissschmelzklebstoff-Zusammensetzung transparent. Eine solche Zusammensetzung enthält mindestens ein transparentes Polyurethanpolymer **P**, typischerweise erhältlich durch Umsetzung mindestens eines amorphen Polyols, insbesondere mindestens eines amorphen Polyester-oder Polycarbonatpolyols mit einem Polyisocyanat in der bereits beschriebenen Weise. Eine transparente feuchtigkeitsreaktive Heissschmelzklebstoff-Zusammensetzung ist besonders geeignet für die Verklebung von transparenten Substraten, bei denen die Verklebungsstelle sichtbar ist.

Amorphe, beziehungsweise transparente, PUR-RHM, welche nur über die Reaktion von Isocyanatgruppen mit Wasser vernetzen, zeigen eine sehr starke Tendenz zur Bildung von Blasen und eine sehr langsame Vernetzung, insbesondere bei einer Anwendung in dickeren Schichten. Dies rührt wohl daher, dass die bei der chemischen Vernetzung mit Feuchtigkeit von der Oberfläche her entstehende amorphe Klebstoff-Haut besonders gasundurchlässig ist und sowohl das bei der Vernetzung entstehende Kohlendioxid von innen her, als auch die für die Vernetzung benötigte Feuchtigkeit von aussen her, kaum passieren lässt.

Die vorgängig beschriebenen feuchtigkeitsreaktiven Heissschmelzklebstoff-Zusammensetzungen, insbesondere die transparenten, verhalten sich in Bezug auf Blasenbildung und Geschwindigkeit der chemischen Vernetzung besonders vorteilhaft. Durch die Anwesenheit mindestens eines Polyaldimins **ALD** der Formel (I a) oder (I b) wird bei der Vernetzung mit Feuchtigkeit einerseits weniger oder gar kein CO₂ gebildet, was die Blasenbildung vermindert; andererseits ist die Geschwindigkeit der Vernetzung deutlich erhöht, wohl aufgrund der schnellen Reaktion des Aldimins und eines verbesserten Transports der Feuchtigkeit durch die Klebstoff-Haut hindurch. Deshalb können solche transparenten feuchtigkeitsreaktive Heissschmelzklebstoff-Zusammensetzungen in dickeren Schichten appliziert werden, beispielsweise in Schichtdicken von mehr als 500 Mikrometern, insbesondere mehr als 800 Mikrometern bis hin zu mehreren Millimetern, ohne dass bei der Vernetzung eine starke Bildung von Blasen auftritt, und ohne dass die Vernetzung übermässig langsam wird.

Bei der Anwendung wird die vorgängig beschriebene feuchtigkeitsreaktive Heissschmelzklebstoff-Zusammensetzung zum Verkleben eines Substrates **S1** und eines Substrates **S2** eingesetzt.

Ein solches Verfahren zur Verklebung eines Substrates **S1** und eines Substrates **S2** umfasst die Schritte
i) Aufheizen der vorgängig beschriebenen feuchtigkeitsreaktiven Heissschmelzklebstoff-Zusammensetzung auf eine Temperatur zwischen 80 °C und 200 °C, insbesondere zwischen 120 °C und 160 °C;
ii) Applikation der aufgeheizten Zusammensetzung auf ein Substrat **S1**;
iii) Kontaktieren der applizierten Zusammensetzung mit einem Substrat **S2**;
wobei das Substrat **S2** aus dem gleichen oder einem unterschiedlichen Material wie das Substrat **S1** besteht.

An den Schritt iii) schliesst sich typischerweise ein Schritt iv) des chemischen Vernetzens der Zusammensetzung mit Feuchtigkeit an. Der Fachmann versteht, dass je nach verwendetem System, Temperatur und Reaktivität der Zusammensetzung, die Vernetzungsreaktion bereits während der Applikation beginnen kann. Der Hauptteil der Vernetzung findet jedoch nach der Applikation, und somit primär im festen Aggregatszustand des Polyurethanpolymers P, bzw. des Klebstoffs, statt.

Die Substrate **S1** und/oder **S2** können bei Bedarf vor dem Applizieren der Zusammensetzung vorbehandelt werden. Derartige Vorbehandlungen umfassen insbesondere physikalische und/oder chemische Reinigungs- und Aktivierungsverfahren, beispielsweise Schleifen, Sandstrahlen, Bürsten, Coronabehandlung, Plasmabehandlung, Beflammen, Anätzen oder dergleichen, oder Behandeln mit Reinigern oder Lösemitteln oder das Aufbringen eines Haftvermittlers, einer Haftvermittlerlösung oder eines Primers.

Die Substrate **S1** und **S2** können eine Vielzahl von Materialien darstellen. Insbesondere eignen sich Kunststoffe, organische Materialien wie Leder, Stoffe, Papier, Holz, mit Harz gebundene Holzwerkstoffe, Harz-Texil-Compositewerkstoffe, Glas, Porzellan, Keramik sowie Metalle und Metall-Legierungen, insbesondere lackierte oder pulverbeschichtete Metalle und Metall-Legierungen.

Als Kunststoffe eignen sich insbesondere Polyvinylchlorid (PVC), Acrylonitril-Butadien-Styrol-Copolymere (ABS), SMC (Sheet Moulding Composites), Polycarbonat (PC), Polyamid (PA), Polyester, Polyoxymethylen (POM), Polyolefine (PO), insbesondere Polyethylen (PE), Polypropylen (PP), Ethylen/Propylen-Copolymere (EPM) und Ethylen/Propylen-Dien-Terpolymere (EPDM), bevorzugt mit Plasma, Corona oder Flammen oberflächenbehandeltes PP oder PE.

Als bevorzugte Materialien für die Substrate **S1** und/oder **S2** gelten transparente Materialien, insbesondere transparente Kunststofffolien. Ein anderes bevorzugtes transparentes Material ist Glas, insbesondere in Form einer Scheibe.

Die Dicke des Klebstoffs in der Verklebung (Verklebungsdicke) beträgt typischerweise 10 Mikrometer oder mehr. Insbesondere liegt die Verklebungsdicke zwischen 10 Mikrometern und 2 Millimetern, vor allem zwischen 80 Mikrometern und 500 Mikrometern.

Die vorgängig beschriebene feuchtigkeitsreaktive Heissschmelzklebstoff-Zusammensetzung wird insbesondere in einem industriellen Fertigungsprozess eingesetzt.

Insbesondere eignet sich die Zusammensetzung für Verklebungen, in welchen die Verklebungsstelle sichtbar ist. So eignet sie sich einerseits insbesondere für die Verklebung von Glas, insbesondere im Fahrzeug- und Fensterbau. Andererseits eignet sie sich insbesondere für das Verkleben von Klarsichtverpackungen.

Aus dem Verklebungsverfahren resultieren Artikel. Derartige Artikel sind insbesondere Artikel der Transportmittel-, Möbel-, Textil- oder Verpackungsbranche. Als Transportmittelbranche wird insbesondere die Automobilbranche bevorzugt.

Beispielhafte derartige Artikel sind Automobil-Innenausstattungsteile, wie Dachhimmel, Sonnenblende, Instrumententafel, Türseitenteil, Hutablage und dergleichen; Holzfaserwerkstoffe aus dem Duschen- und Badbereich; Möbel-Dekorfolien, Membranfolien mit Textilien wie Baumwolle, Polyesterfolien im Bekleidungsbereich oder Textilien mit Schäumen für Autoausstattungen.

Weitere derartige Artikel insbesondere Artikel aus der Verpackungsbranche. Insbesondere handelt es sich bei einem derartigen Artikel um eine Klarsichtverpackung.

Die vorgängig beschriebene feuchtigkeitsreaktive Heissschmelzklebstoff-Zusammensetzung, umfassend
a) mindestens ein bei Raumtemperatur festes, Isocyanatgruppen aufweisendes Polyurethanpolymer **P**,
b) mindestens ein Polyaldimin **ALD** der Formel (I a) oder (I b), und
c) mindestens eine Säure **K** in Form einer organischen Mono- oder Dicarbonsäure oder einer organischen Mono- oder Disulfonsäure oder einer zu einer dieser Säuren hydrolysierbaren Verbindung
weist gegenüber dem Stand der Technik eine Reihe von Vorteilen auf.

So ist sie hervorragend hitzestabil, d.h. dass die Viskosität bei einer gegebenen Applikationstemperatur über die Zeit nicht oder nur geringfügig erhöht wird. Weiterhin hat sie eine stark verminderte Tendenz zur Bildung von Blasen und zeigt im Vergleich zu nur über die Reaktion von Isocyanatgruppen mit Wasser vernetzenden Systemen eine deutlich höhere Vernetzungsgeschwindigkeit. Neben diesen Vorteilen zeigt die beschriebene feuchtigkeitsreaktive Heissschmelzklebstoff-Zusammensetzung ähnlich gute Eigenschaften wie die Systeme nach dem Stand der Technik, nämlich eine schnelle Klebefestigkeit, eine gute Wärmestandfestigkeit und eine hohe Endfestigkeit bei einer guten Dehnbarkeit, wobei die mechanischen Endeigenschaften sich in einem sehr breiten Bereich an die Bedürfnisse einer Klebeanwendung anpassen lassen.

In einer besonders bevorzugten Ausführungsform ist sie geruchsfrei.

In einer weiteren besonders bevorzugten Ausführungsform ist sie amorph, insbesondere transparent.

In einem weiteren Aspekt betrifft die Erfindung ein Verfahren zur Reduktion der Blasenbildung und zur Beschleunigung der chemischen Vernetzung von amorphen, insbesondere transparenten, feuchtigkeitsreaktiven Heissschmelzklebstoff-Zusammensetzungen, indem zu mindestens einem amorphen Polyurethanpolymer **P**, wie es vorgängig bereits beschrieben wurde, mindestens ein Polyaldimin **ALD** der Formel (I a) oder (I b), wie es vorgängig bereits beschrieben wurde, und mindestens eine Säure **K** in Form einer organischen Mono- oder Dicarbonsäure oder einer organischen Mono- oder Disulfonsäure oder einer zu einer dieser Säuren hydrolysierbaren Verbindung, wie sie vorgängig bereits beschrieben wurde, gegeben wird.

### Beispiele

### Beschreibung der Prüfmethoden

Der totale **Gehalt an Aldiminogruppen und freien Aminogruppen** in den hergestellten Verbindungen ("**Amin-Gehalt**") wurde titrimetrisch bestimmt (mit 0.1N HClO₄ in Eisessig, gegen Kristallviolett) und ist stets angegeben in mmol NH₂/g (auch wenn es sich nicht nur um primäre Aminogruppen handelt).

Die **Viskosität** wurde bei der angegebenen Temperatur mit einem Brookfield Viskosimeter mit Spindel Nr. 27 und 5 Umdrehungen pro Minute gemessen.

Die **Durchhärtungszeit** wurde folgendermassen bestimmt: Der jeweilige Heissschmelzklebstoff wurde bei 150 °C auf Silikonpapier appliziert, so dass ein Klebstoffstreifen von 60 x 500 mm mit einer Dicke von 500 Mikrometern entstand. Dieser Probekörper wurde bei 23 °C und 55 % relativer Luftfeuchtigkeit gelagert. In regelmässigen Zeitabständen wurde ein Stück dieses Streifens abgeschnitten und auf eine Heizplatte mit einer Temperatur von 150 °C gelegt. Sobald kein Aufschmelzen des Klebstoffes mehr zu beobachten war, galt der Klebstoff als durchgehärtet. Die Durchhärtungszeit ist ein Mass für die Geschwindigkeit der chemischen Vernetzung.

Die **Zugfestigkeit** und die **Bruchdehnung** wurden in Anlehnung an DIN 53504 bestimmt, an Hanteln mit einer Dicke von 2 mm und einer Länge von 75 mm (Steglänge 30 mm, Stegbreite 4 mm). Zur Herstellung der Hanteln wurde ein Klebstofffilm von 2 mm Dicke zubereitet (Applikationstemperatur des Klebstoffs 150 °C), aus welchem die Hanteln ausgestanzt und anschliessend während 2 Wochen bei 23 °C und 50% relativer Luftfeuchtigkeit gelagert wurden.

Die **bleibende Zugverlängerung** wurde an den zur Messung der Zugfestigkeit und Bruchdehnung benutzten Hanteln geprüft. 1 Minute nach der Entlastung wurde die gerissene Hantel wieder zusammengefügt, deren Länge gemessen und davon die Ausgangslänge von 75 mm abgezogen. Die Zugverlängerung ist ein Mass für das Rückstellvermögen des Klebstoffs: je geringer die bleibende Zugverlängerung, desto besser das Rückstellvermögen.

Die **Blasenbildung** wurde optisch bestimmt an zylinderförmigen Probekörpern mit einem Durchmesser von 25 mm und einer Dicke von 2 mm, welche bei einer Klebstoff temperatur von 150 °C hergestellt und anschliessend 2 Wochen bei 23 °C und 50% relativer Luftfeuchtigkeit gelagert wurden.

### a) Herstellung der Polyaldimine ALD

### Polyaldimin ALD-1

In einem Rundkolben wurden unter Stickstoffatmosphäre 625 g (2.20 mol) 2,2-Dimethyl-3-lauroyloxy-propanal vorgelegt. Unter kräftigem Rühren wurden aus einem Eintropftrichter langsam 250 g (2.10 mol NH₂) Jeffamine^{®} D-230 (Huntsman; alpha, omega-Polyoxypropylendiamin, Amin-Equivalentgewicht 119 g/Eq) zugegeben. Danach wurden bei 80 °C die flüchtigen Bestandteile im Vakuum vollständig abdestilliert. Es wurden 837 g gelbliches, bei Raumtemperatur flüssiges Reaktionsprodukt erhalten mit einem Aldimin-Gehalt, bestimmt als Amin-Gehalt, von 2.5 mmol NH₂/g.

### Polyaldimin ALD-2

In einem Rundkolben wurden unter Stickstoffatmosphäre 298.7 g (1.05 mol) 2,2-Dimethyl-3-lauroyloxy-propanal vorgelegt. Unter kräftigem Rühren wurden aus einem beheizten Eintropftrichter langsam 58.1 g (0.50 mol) 1,6-Hexamethylendiamin zugegeben. Danach wurden bei 80 °C die flüchtigen Bestandteile im Vakuum vollständig abdestilliert. Es wurden 338.2 g gelbliches, bei Raumtemperatur flüssiges Reaktionsprodukt erhalten mit einem Aldimin-Gehalt, bestimmt als Amin-Gehalt, von 2.94 mmol NH₂/g.

### Polyaldimin ALD-3

In einem Rundkolben wurden unter Stickstoffatmosphäre 625 g (2.20 mol) 2,2-Dimethyl-3-lauroyloxy-propanal vorgelegt. Unter kräftigem Rühren wurden aus einem Eintropftrichter langsam 334.2 g (2.10 mol NH₂) Jeffamine® T-403 (Huntsman; Polyoxypropylentriamin, Amin-Equivalentgewicht 159 g/Eq) zugegeben. Danach wurden bei 80 °C die flüchtigen Bestandteile im Vakuum vollständig abdestilliert. Es wurden 921 g gelbliches, bei Raumtemperatur flüssiges Reaktionsprodukt erhalten mit einem Aldimin-Gehalt, bestimmt als Amin-Gehalt, von 2.28 mmol NH₂/g.

### b) Herstellung eines Polyurethanpolymers P

1000 g Polyol Dynacoll^{®} 7250 (Polyester-Diol, OH-Zahl 21 mg KOH/g, bei Raumtemperatur flüssig; Degussa), 1000 g Polyol Dynacoll^{®} 7150 (Polyester-Diol, OH-Zahl 42 mg KOH/g, bei Raumtemperatur fest, amorph, Erweichungspunkt 95 °C; Degussa) und 281 g 4,4'-Methylendiphenyldiisocyanat (MDI; Desmodur^{®} 44 MC L, Bayer) wurden nach bekanntem Verfahren bei 140 °C zu einem NCO-terminierten Polyurethanpolymeren umgesetzt. Das Reaktionsprodukt hatte einen titrimetrisch bestimmten Gehalt an freien Isocyanatgruppen von 2.0 Gewichts-% und war bei Raumtemperatur fest. Es wurde unter Ausschluss von Feuchtigkeit aufbewahrt.

### c) Herstellung von Heissschmelzklebstoffen

### Beispiel 1

95 Gewichtsteile (GT) des beschriebenen Polyurethanpolymers P, 5 GT Polyaldimin *ALD-1* und 0.05 GT Benzoesäure wurden bei einer Temperatur von 140 °C homogen vermischt und unter Ausschluss von Feuchtigkeit aufbewahrt.

### Beispiel 2

95 Gewichtsteile (GT) des beschriebenen Polyurethanpolymers P, 5 GT Polyaldimin *ALD-2* und 0.05 GT Benzoesäure wurden bei einer Temperatur von 140 °C homogen vermischt und unter Ausschluss von Feuchtigkeit aufbewahrt.

### Beispiel 3

95 Gewichtsteile (GT) des beschriebenen Polyurethanpolymers P, 5 GT Polyaldimin *ALD-3* und 0.05 GT Benzoesäure wurden bei einer Temperatur von 140 °C homogen vermischt und unter Ausschluss von Feuchtigkeit aufbewahrt.

### Beispiel 4 (Vergleich)

Als Beispiel 4 wurde das beschriebene Polyurethanpolymer P verwendet, also ohne Zusatz eines Polyaldimins *ALD* und einer Säure.

**Tabelle 1: Eigenschaften der Beispiele 1 bis 3 und des Vergleichsbeispiels 4.**

| **Beispiel** | **1** | **2** | **3** | **4** (Vergl.) |
|---|---|---|---|---|
| Viskosität bei 130 °C [Pa·s] | 15 | 16 | 21 | 14.5 |
| Durchhärtungszeit | 18 h | 22 h | 24 h | 48 h |
| Zugfestigkeit [MPa] | 34 | 30 | 31 | n.b.^{a} |
| Bruchdehnung [%] | 450 | 475 | 415 | n.b.^{a} |
| Bleibende Zugverlängerung | 5.5 mm | 3.5 mm | 8.5 mm | 10 mm |
| Blasenbildung | wenige | wenige | wenige | sehr viele, Schaum |

| | | | | |
|---|---|---|---|---|
| ^{a} n.b. = nicht bestimmbar, da zu viele Blasen im Film | | | | |

Die Resultate der Tabelle 1 zeigen, dass die Heissschmelzklebstoffe der erfindungsgemässen Beispiele 1, 2 und 3 eine deutlich kürzere Durchhärtungszeit, das heisst eine höhere Vernetzungsgeschwindigkeit, und eine stark verminderte Blasenbildung aufweisen im Vergleich zum Heissschmelzklebstoff des Vergleichsbeispiels 4. Die Heissschmelzklebstoffe der erfindungsgemässen Beispiele 1, 2 und 3 weisen ausserdem eine geringere bleibende Zugverlängerung, und damit ein besseres Rückstellvermögen, auf als der Heissschmelzklebstoff des Vergleichsbeispiels 4.

## Patentansprüche

1. Feuchtigkeitsreaktive Heissschmelzklebstoff-Zusammensetzung umfassend
a) mindestens ein bei Raumtemperatur festes, Isocyanatgruppen aufweisendes Polyurethanpolymer P,
b) mindestens ein Polyaldimin **ALD** der Formel (I a) oder (I b), 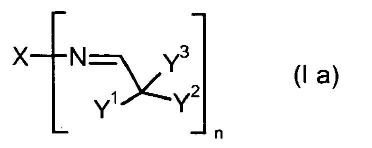 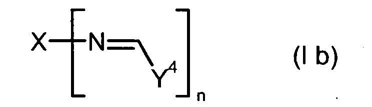
c) mindestens eine Säure K in Form einer organischen Monocarbonsäure oder Dicarbonsäure oder einer organischen Monosulfonsäure oder Disulfonsäure oder einer zu einer dieser Säuren hydrolysierbaren Verbindung;
wobei in Formel (I a) oder (I b)
X für den organischen Rest eines n-funktionellen primären Polyamins nach Entfernung von n aliphatischen primären Aminogruppen steht, wobei dieser organische Rest keine Gruppierungen aufweist, die in Abwesenheit von Wasser mit Isocyanatgruppen reaktionsfähig sind, insbesondere keine Hydroxylgruppen, keine sekundären Aminogruppen, keine Harnstoffgruppen und keine anderen Gruppen mit aktivem Wasserstoff;
n für 2 oder 3 oder 4, insbesondere für 2 oder 3, bevorzugt für 2, steht;
Y¹ und Y²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen, ist, stehen;
Y³ für einen einwertigen Kohlenwasserstoffrest steht, welcher gegebenenfalls mindestens ein Heteroatom, insbesondere Sauerstoff in Form von Ether-, Carbonyl- oder Ester-Gruppen, aufweist;
Y⁴ entweder
für eine substituierte oder unsubstituierte Aryl- oder Heteroaryl-Gruppe, welche eine Ringgrösse zwischen 5 und 8, bevorzugt 6, Atomen aufweist, steht
oder für 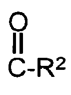 steht,
wobei R² für ein Wasserstoffatom oder für eine Alkoxygruppe steht,
oder für eine substituierte oder unsubstituierte Alkenyl- oder Arylalkenylgruppe mit mindestens 6 C-Atomen steht.

2. Feuchtigkeitsreaktive Heissschmelzklebstoff-Zusammensetzung gemäss Anspruch 1, **dadurch gekennzeichnet, dass** das feste, Isocyanatgruppen aufweisende Polyurethanpolymer P aus mindestens einem Polyol und mindestens einem Polyisocyanat hergestellt wird.

3. Feuchtigkeitsreaktive Heissschmelzklebstoff-Zusammensetzung gemäss Anspruch 2, **dadurch gekennzeichnet, dass** das Polyol ein Polyesterpolyol, insbesondere ein bei Raumtemperatur flüssiges, amorphes, teilkristallines oder kristallines Polyesterdiol, ist, wobei das bei Raumtemperatur flüssige Polyesterdiol bei einer Temperatur zwischen 0 °C und 25 °C fest ist und vorzugsweise in Kombination mit mindestens einem amorphen, teilkristallinen oder kristallinen Polyesterpolyol eingesetzt wird.

4. Feuchtigkeitsreaktive Heissschmelzklebstoff-Zusammensetzung gemäss Anspruch 2, **dadurch gekennzeichnet, dass** das Polyol ein Polycarbonatpolyol, insbesondere ein Polycarbonatdiol, ist.

5. Feuchtigkeitsreaktive Heissschmelzklebstoff-Zusammensetzung gemäss einem der Ansprüche 2 bis 4, **dadurch gekennzeichnet, dass** das Polyol amorph ist.

6. Feuchtigkeitsreaktive Heissschmelzklebstoff-Zusammensetzung gemäss einem der vorhergehenden Ansprüche, **dadurch gekennzeichnet, dass** für die Herstellung des bei Raumtemperatur festen Polyurethanpolymers **P** mindestens ein Diisocyanat, insbesondere MDI, TDI, HDI oder IPDI, bevorzugt MDI, eingesetzt wird.

7. Feuchtigkeitsreaktive Heissschmelzklebstoff-Zusammensetzung gemäss einem der vorhergehenden Ansprüche, **dadurch gekennzeichnet, dass** das bei Raumtemperatur feste Polyurethanpolymer **P** in einer Menge von 40 - 100 Gewichts-%, insbesondere von 75 - 100 Gewichts-%, bevorzugt von 80 - 100 Gewichts-%, bezogen auf die gesamte Heissschmelzklebstoff-Zusammensetzung, vorhanden ist.

8. Feuchtigkeitsreaktive Heissschmelzklebstoff-Zusammensetzung gemäss einem der vorhergehenden Ansprüche, **dadurch gekennzeichnet, dass** das n-funktionelle primäre Polyamin ausgewählt ist aus der Gruppe bestehend aus 1,6-Hexamethylendiamin, MPMD, DAMP, IPDA, 4-Aminomethyl-1,8-octandiamin, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,4-Diamino-2,2,6-trimethylcyclohexan und Polyoxyalkylen-Polyamine mit zwei oder drei Aminogruppen, sowie deren Mischungen untereinander.

9. Feuchtigkeitsreaktive Heissschmelzklebstoff-Zusammensetzung gemäss einem der vorhergehenden Ansprüche, **dadurch gekennzeichnet, dass** das Polyaldimin **ALD** der Formel (I a) oder (I b) in einer derartigen Menge in der Heissschmelzklebstoff-Zusammensetzung vorhanden ist, dass das Verhältnis zwischen Aldimingruppen und Isocyanatgruppen 0.1 bis 1.1, insbesondere 0.15 bis 1.0, besonders bevorzugt 0.2 bis 0.9, Equivalent Aldimingruppen pro Equivalent Isocyanatgruppen beträgt.

10. Feuchtigkeitsreaktive Heissschmelzklebstoff-Zusammensetzung gemäss einem der vorhergehenden Ansprüche, **dadurch gekennzeichnet, dass Y¹** und Y² jeweils für eine Methylgruppe steht.

11. Feuchtigkeitsreaktive Heissschmelzklebstoff-Zusammensetzung gemäss einem der vorhergehenden Ansprüche, **dadurch gekennzeichnet, dass** Y³ für einen Rest der Formel (II) oder (III) steht 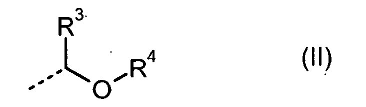 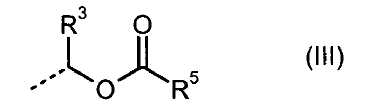
wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 12 bis 30, C-Atomen, der gegebenenfalls Heteroatome enthält, steht; und
R⁵ entweder
für ein Wasserstoffatom steht,
oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder für einen einfach oder mehrfach ungesättigten, linearen oder verzweigten Kohlenwasserstoffrest mit 5 bis 30 C-Atomen steht,
oder für einen, gegebenenfalls substituierten, aromatischen oder heteroaromatischen, 5- oder 6-gliedrigen Ring steht.

12. Feuchtigkeitsreaktive Heissschmelzklebstoff-Zusammensetzung gemäss einem der vorhergehenden Ansprüche, **dadurch gekennzeichnet, dass** das Polyaldimin **ALD** die Formel (I a) aufweist.

13. Feuchtigkeitsreaktive Heissschmelzklebstoff-Zusammensetzung gemäss einem der vorhergehenden Ansprüche, **dadurch gekennzeichnet, dass** die Säure **K** eine aromatische Monocarbonsäure, insbesondere Benzoesäure, Salicylsäure oder 2-Nitrobenzoesäure ist.

14. Feuchtigkeitsreaktive Heissschmelzklebstoff-Zusammensetzung gemäss einem der vorhergehenden Ansprüche, **dadurch gekennzeichnet, dass** die Säure **K** in einer Menge von 0.001 bis 5 Gewichts-%, bevorzugt 0.005 bis 2 Gewichts-%, bezogen auf die gesamte Heissschmelzklebstoff-Zusammensetzung, vorhanden ist.

15. Feuchtigkeitsreaktive Heissschmelzklebstoff-Zusammensetzung gemäss einem der vorhergehenden Ansprüche, **dadurch gekennzeichnet, dass** die Heissschmelzklebstoff-Zusammensetzung frei von Füllstoffen, insbesondere frei von Russ, ist.

16. Feuchtigkeitsreaktive Heissschmelzklebstoff-Zusammensetzung gemäss einem der vorhergehenden Ansprüche, **dadurch gekennzeichnet, dass** das Polyurethanpolymer **P** amorph ist.

17. Verfahren zur Verklebung eines Substrates **S1** und eines Substrates S2 umfassend die Schritte
i) Aufheizen der feuchtigkeitsreaktiven Heissschmelzklebstoff-Zusammensetzung gemäss einem der Ansprüche 1 bis 16 auf eine Temperatur zwischen 80 °C und 200 °C, insbesondere zwischen 120 °C und 160 °C;
ii) Applikation der aufgeheizten Zusammensetzung auf ein Substrat S1;
iii) Kontaktieren der applizierten Zusammensetzung mit einem Substrat **S2;**
wobei das Substrat **S2** aus dem gleichen oder einem unterschiedlichen Material wie das Substrat **S1** besteht.

18. Verfahren zur Verklebung gemäss Anspruch 17, **dadurch gekennzeichnet, dass** an Schritt iii) sich ein Schritt iv) des chemischen Vernetzens der Zusammensetzung mit Feuchtigkeit anschliesst.

19. Verfahren zur Verklebung gemäss Anspruch 17 oder 18, **dadurch gekennzeichnet, dass** das Substrat **S1** und/oder **S2** ein Kunststoff, ein organisches Material wie Leder, Stoff, Papier, Holz, ein mit Harz gebundener Holzwerkstoff, ein Harz-Texil-Compositewerkstoff, Glas, Porzellan, Keramik oder ein Metall oder eine Metall-Legierungen, insbesondere ein lackiertes oder pulverbeschichtetes Metall oder Metall-Legierung, ist.

20. Verfahren zur Verklebung gemäss Anspruch 17 oder 18 oder 19, **dadurch gekennzeichnet, dass** das Substrat **S1** und/oder S2 ein transparentes Material, insbesondere eine transparente Kunststofffolie oder ein Glas, ist.

21. Verfahren zur Verklebung gemäss einem der Ansprüche 17 bis 20, **dadurch gekennzeichnet, dass** die Dicke des Klebstoffes in der Verklebung ≥ 10 Mikrometer, insbesondere zwischen 10 Mikrometer und 2 Millimeter, vor allem zwischen 80 Mikrometer und 500 Mikrometer, beträgt.

22. Artikel, welcher nach einem Verfahren zur Verklebung gemäss einem der Ansprüche 17 bis 21 verklebt wurde.

23. Artikel nach Anspruch 22, **dadurch gekennzeichnet, dass** der Artikel ein Artikel der Transportmittel-, Möbel-, Textil- oder Verpackungsbranche ist.

24. Verfahren zur Reduktion der Blasenbildung und zur Beschleunigung der chemischen Vernetzung von amorphen, insbesondere transparenten, feuchtigkeitsreaktiven Heissschmelzklebstoff-Zusammensetzungen, indem zu mindestens einem amorphen Polyurethanpolymer **P,**
wie es in einer feuchtigkeitsreaktiven Heissschmelzklebstoff-Zusammensetzung gemäss einem der Ansprüche 1 bis 16 beschrieben worden ist,
mindestens ein Polyaldimin **ALD** der Formel (I a) oder (I b),
wie es in einer feuchtigkeitsreaktiven Heissschmelzklebstoff-Zusammensetzung gemäss einem der Ansprüche 1 bis 16 beschrieben worden ist,
und mindestens eine Säure K in Form einer organischen Monocarbonsäure oder Dicarbonsäure oder einer organischen Monosulfonsäure oder Disulfonsäure oder einer zu einer dieser Säuren hydrolysierbaren Verbindung,
wie sie in einer feuchtigkeitsreaktiven Heissschmelzklebstoff-Zusammensetzung gemäss einem der Ansprüche 1 bis 16 beschrieben worden ist,
gegeben wird.

## Claims

1. A moisture-reactive hotmelt adhesive composition comprising
a) at least one polyurethane polymer **P** which is solid at room temperature and contains isocyanate groups,
b) at least one polyaldimine **ALD** of the formula (I a) or (I b), 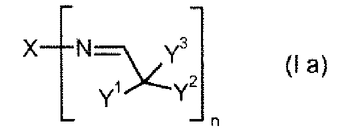 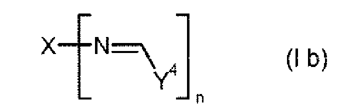
c) at least one acid K in the form of an organic monocarboxylic acid or dicarboxylic acid or of an organic monosulfonic acid or disulfonic acid, or of a compound which can be hydrolyzed to one of these acids;
where in formula (I a) or (I b)
X is the organic radical of an n-functional primary polyamine following removal of n aliphatic primary amino groups,
this organic radical containing no moieties which in the absence of water are reactive with isocyanate groups, in particular no hydroxyl groups, no secondary amino groups, no urea groups, and no other groups with active hydrogen;
n is 2 or 3 or 4, more particularly 2 or 3, preferably 2;
Y¹ and Y²
either independently of one another are each a monovalent hydrocarbon radical having 1 to 12 C atoms,
or together are a divalent hydrocarbon radical having 4 to 20 C atoms which is part of an optionally substituted carbocyclic ring having 5 to 8, preferably 6, C atoms;
Y³ is a monovalent hydrocarbon radical which optionally contains at least one heteroatom, more particularly oxygen in the form of ether, carbonyl or ester groups;
Y⁴ alternatively
is a substituted or unsubstituted aryl or heteroaryl group which has a ring size of between 5 and 8, preferably 6, atoms
or is 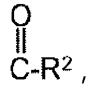 where R² is a hydrogen atom or is an alkoxy group,
or is a substituted or unsubstituted alkenyl or arylalkenyl group having at least 6 C atoms.

2. The moisture-reactive hotmelt adhesive composition of claim 1, **characterized in that** the solid polyurethane polymer **P** containing isocyanate groups is prepared from at least one polyol and at least one polyisocyanate.

3. The moisture-reactive hotmelt adhesive composition of claim 2, **characterized in that** the polyol is a polyester polyol, more particularly a polyester diol which is crystalline, partly crystalline, amorphous or liquid at room temperature, the polyester diol which is liquid at room temperature being solid at a temperature between 0°C and 25°C and being used preferably in combination with at least one amorphous, partly crystalline or crystalline polyester polyol.

4. The moisture-reactive hotmelt adhesive composition of claim 2, **characterized in that** the polyol is a polycarbonate polyol, more particularly a polycarbonate diol.

5. The moisture-reactive hotmelt adhesive composition of any of claims 2 to 4, **characterized in that** the polyol is amorphous.

6. The moisture-reactive hotmelt adhesive composition of any of the preceding claims, **characterized in that** the polyurethane polymer **P** which is solid at room temperature is prepared using at least one diisocyanate, more particularly MDI, TDI, HDI or IPDI, preferably MDI.

7. The moisture-reactive hotmelt adhesive composition according to any of the preceding claims, **characterized in that** the polyurethane polymer **P** which is solid at room temperature is present in an amount of 40% - 100% by weight, more particularly of 75% - 100% by weight, preferably of 80% - 100% by weight, based on the overall hotmelt adhesive composition.

8. The moisture-reactive hotmelt adhesive composition of any of the preceding claims, **characterized in that** the n-functional primary polyamine is selected from the group consisting of 1,6-hexamethylenediamine, MPMD, DAMP, IPDA, 4-aminomethyl-1,8-octanediamine, 1,3-xylylenediamine, 1,3-bis(aminomethyl)cyclohexane, bis(4-aminocyclohexyl)methane, bis(4-amino-3-methylcyclohexyl)methane, 3(4),8(9)-bis(aminomethyl)tricyclo [5.2.1.0^{2,6}]decane, 1,4-diamino-2,2,6-trimethylcyclohexane, and polyoxyalkylene-polyamines having two or three amino groups, and also their mixtures with one another.

9. The moisture-reactive hotmelt adhesive composition of any of the preceding claims, **characterized in that** the polyaldimine **ALD** of the formula (I a) or (I b) is present in the hotmelt adhesive composition in an amount such that the ratio between aldimine groups and isocyanate groups is 0.1 to 1.1, more particularly 0.15 to 1.0, more preferably 0.2 to 0.9, equivalent of aldimine groups per equivalent of isocyanate groups.

10. The moisture-reactive hotmelt adhesive composition of any of the preceding claims, **characterized in that** Y¹ and Y² are each a methyl group.

11. The moisture-reactive hotmelt adhesive composition of any of the preceding claims, **characterized in that** Y³ is a radical of the formula (II) or (III) 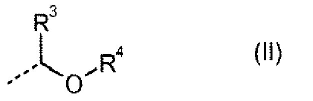 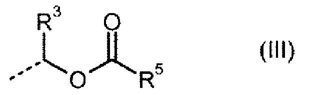
where R³ is a hydrogen atom or is an alkyl or arylalkyl group, preferably a hydrogen atom;
R⁴ is a hydrocarbon radical having 1 to 30, more particularly 12 to 30, C atoms, which optionally contains heteroatoms; and
R⁵ alternatively
is a hydrogen atom,
or is a linear or branched alkyl radical having 1 to 30, more particularly 11 to 30, C atoms, optionally with cyclic fractions and optionally with at least one heteroatom,
or is a singly or multiply unsaturated, linear or branched hydrocarbon radical having 5 to 30 C atoms,
or is an optionally substituted aromatic or heteroaromatic, 5- or 6-membered ring.

12. The moisture-reactive hotmelt adhesive composition of any of the preceding claims, **characterized in that** the polyaldimine **ALD** has the formula (I a).

13. The moisture-reactive hotmelt adhesive composition of any of the preceding claims, **characterized in that** the acid **K** is an aromatic monocarboxylic acid, more particularly benzoic acid, salicylic acid or 2-nitrobenzoic acid.

14. The moisture-reactive hotmelt adhesive composition of any of the preceding claims, **characterized in that** the acid **K** is present in an amount of 0.001% to 5% by weight, preferably 0.005% to 2% by weight, based on the overall hotmelt adhesive composition.

15. The moisture-reactive hotmelt adhesive composition of any of the preceding claims, **characterized in that** the hotmelt adhesive composition is free of fillers, more particularly free of carbon black.

16. The moisture-reactive hotmelt adhesive composition of any of the preceding claims, **characterized in that** the polyurethane polymer **P** is amorphous.

17. A method of adhesively bonding a substrate S1 and a substrate S2, comprising the steps of
i) heating the moisture-reactive hotmelt adhesive composition of any of claims 1 to 16 to a temperature between 80°C and 200°C, more particularly between 120°C and 160°C;
ii) applying the heated composition to a substrate **S1;**
iii) contacting the applied composition with a substrate **S2;**
the substrate S2 being composed of the same or a different material to the substrate **81.**

18. The method of adhesive bonding of claim 17, **characterized in that** step iii) is followed by a step (iv) of chemically crosslinking the composition with moisture.

19. The method of adhesive bonding of claim 17 or 18, **characterized in that** the substrate **S1** and/or **S2** is a plastic, an organic material such as leather, fabric, paper, wood, a resin-bound woodbase material, a resin-textile composite material, glass, porcelain, ceramic or a metal or a metal alloy, more particularly a painted or powder-coated metal or metal alloy.

20. The method of adhesive bonding of claim 17 or 18 or 19, **characterized in that** the substrate **S1** and/or **S2** is a transparent material, more particularly a transparent polymeric film or a glass.

21. The method of adhesive bonding of any of claims 17 to 20, **characterized in that** the thickness of the adhesive in the bond is ≥ 10 micrometers, more particularly between 10 micrometers and 2 millimeters, especially between 80 micrometers and 500 micrometers.

22. An article adhesively bonded by a method of adhesive bonding of any of claims 17 to 21.

23. The article of claim 22, **characterized in that** the article is an article of the transport, furniture, textile or packaging sector.

24. A method of reducing bubble formation and of accelerating the chemical crosslinking of amorphous, more particularly transparent, moisture-reactive hotmelt adhesive compositions, by admixing at least one amorphous polyurethane polymer **P**
as described in a moisture-reactive hotmelt adhesive composition of any of claims 1 to 16,
at least one polyaldimine **ALD** of the formula (I a) or (I b)
as described in a moisture-reactive hotmelt adhesive composition of any of claims 1 to 16,
and at least one acid K in the form of an organic monocarboxylic acid or dicarboxylic acid or of an organic monosulfonic acid or disulfonic acid or of a compound which can be hydrolyzed to one of these acids,
as described in a moisture-reactive hotmelt adhesive composition of any of claims 1 to 16.

## Revendications

1. Composition d'adhésif thermofusible réactive à l'humidité, comprenant
a) au moins un polymère polyuréthanne **P** solide à la température ambiante, comportant des groupes isocyanate,
b) au moins une polyaldimine **ALD** de formule (I a) ou (I b), 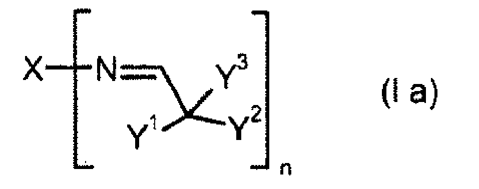 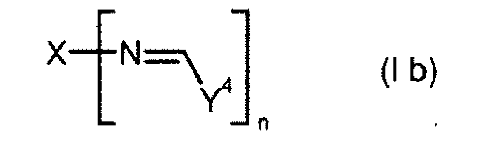
c) au moins un acide **K** sous forme d'un acide monocarboxylique ou dicarboxylique organique ou d'un acide monosulfonique ou disulfonique organique ou d'un composé hydrolysable en l'un de ces acides ;
dans la formule (I a) ou (I b)
X représentant le reste organique d'une polyamine primaire n-fonctionnelle, après élimination de n groupes amino primaires aliphatiques,
ce radical organique ne comportant pas de groupements aptes à réagir avec des groupes isocyanate en absence d'eau, en particulier pas de groupes hydroxy, pas de groupes amino secondaires, pas de groupes urée et pas d'autres groupes à hydrogène actif ;
n représente 2 ou 3 ou 4, en particulier 2 ou 3, de préférence 2 ;
Y¹ et Y² représentent chacun, indépendamment l'un de l'autre, un radical hydrocarboné monovalent ayant de 1 à 12 atomes de carbone,
ou représentent ensemble un radical hydrocarboné divalent ayant de 4 à 20 atomes de carbone, qui fait partie d'un cycle carbocyclique éventuellement substitué, ayant de 5 à 8, de préférence 6, atomes de carbone ;
Y³ représente un radical hydrocarboné monovalent qui comporte éventuellement au moins un hétéroatome, en particulier un atome d'oxygène sous forme de groupes éther, carbonyle ou ester ;
Y⁴ soit représente
un groupe aryle ou hétéroaryle substitué ou non substitué, qui présente une taille de cycle comprise entre 5 et 8, de préférence 6, atomes de carbone
soit représente 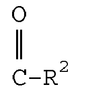
R² représentant un atome d'hydrogène ou un groupe alcoxy,
ou représente un groupe alcényle ou arylalcényle substitué ou non substitué ayant au moins 6 atomes de carbone.

2. Composition d'adhésif thermofusible réactive à l'humidité selon la revendication 1, **caractérisée en ce que** le polymère polyuréthanne **P** solide, comportant des groupes isocyanate est préparé à partir d'au moins un polyol et d'au moins un polyisocyanate.

3. Composition d'adhésif thermofusible réactive à l'humidité selon la revendication 2, **caractérisée en ce que** le polyol est un polyester-polyol, en particulier un polyester-polyol amorphe, cristallin ou partiellement cristallin, liquide à la température ambiante, le polyester-polyol liquide à la température ambiante étant solide à une température comprise entre 0 °C et 25 °C et étant utilisé de préférence en association avec au moins un polyester-polyol amorphe, cristallin ou partiellement cristallin.

4. Composition d'adhésif thermofusible réactive à l'humidité selon la revendication 2, **caractérisée en ce que** le polyol est un polycarbonate-polyol, en particulier un polycarbonate-diol.

5. Composition d'adhésif thermofusible réactive à l'humidité selon l'une quelconque des revendications 2 à 4, **caractérisée en ce que** le polyol est amorphe.

6. Composition d'adhésif thermofusible réactive à l'humidité selon l'une quelconque des revendications précédentes, **caractérisée en ce que** pour la préparation du polymère polyuréthanne **P** solide à la température ambiante on utilise au moins un diisocyanate, en particulier le MDI, le TDI, le HDI ou l'IPDI, de préférence le MDI.

7. Composition d'adhésif thermofusible réactive à l'humidité selon l'une quelconque des revendications précédentes, **caractérisée en ce que** le polymère polyuréthanne **P** solide à la température ambiante est présent en une quantité de 40 - 100 % en poids, en particulier de 75 - 100 % en poids, de préférence de 80 - 100 % en poids, par rapport à la composition d'adhésif thermofusible totale.

8. Composition d'adhésif thermofusible réactive à l'humidité selon l'une quelconque des revendications précédentes, **caractérisée en ce que** la polyamine primaire n-fonctionnelle est choisie dans le groupe constitué par la 1,6-hexaméthylènediamine, la MPMD, la DAMP, l'IPDA, la 4-aminométhyl-1,8-octanediamine, la 1,3-xylylènediamine, le 1,3-bis(aminométhyl)-cyclohexane, le bis(4-aminocyclohexyl)-méthane, le bis(4-amino-3-méthylcyclohexyl)-méthane, le 3(4),8(9)-bis(aminométhyl)-tricyclo[5.2.1.0^{2,6}]décane, le 1,4-diamino-2,2,6-triméthylcyclohexane et des polyoxyalkylène-polyamines comportant deux ou trois groupes amino, ainsi que des mélanges de ces composés entre eux.

9. Composition d'adhésif thermofusible réactive à l'humidité selon l'une quelconque des revendications précédentes, **caractérisée en ce que** la polyaldimine ALD de formule (I a) ou (I b) est présente en une quantité telle dans la composition d'adhésif thermofusible que le rapport entre les groupes aldimino et les groupes isocyanate va de 0,1 à 1,1, en particulier de 0,15 à 1,0, de façon particulièrement préférée, de 0,2 à 0,9 équivalent de groupes aldimino par équivalent de groupe isocyanate.

10. Composition d'adhésif thermofusible réactive à l'humidité selon l'une quelconque des revendications précédentes, **caractérisée en ce que** Y¹ et Y² représentent chacun un groupe méthyle.

11. Composition d'adhésif thermofusible réactive à l'humidité selon l'une quelconque des revendications précédentes, **caractérisée en ce que** Y³ représente un radical de formule (II) ou (III) 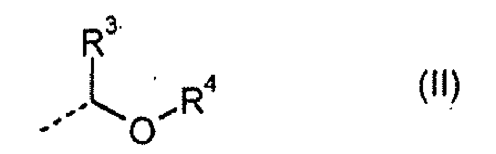 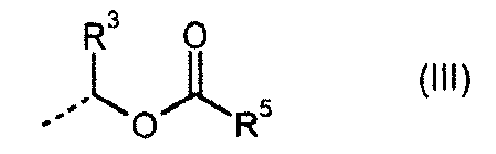
où R³ représente un atome d'hydrogène ou un groupe alkyle ou arylalkyle, de préférence un atome d'hydrogène ;
R⁴ représente un radical hydrocarboné ayant de 1 à 30, en particulier de 12 à 30 atomes de carbone ; qui contient éventuellement des hétéroatomes; et
R⁵ représente
soit un atome d'hydrogène,
soit un radical alkyle linéaire ou ramifié ayant de 1 à 30, en particulier de 11 à 30, atomes de carbone, comportant éventuellement des fragments cycliques et éventuellement au moins un hétéroatome,
ou un radical hydrocarboné une ou plusieurs fois insaturé, linéaire ou ramifié, ayant de 5 à 30 atomes de carbone,
ou un cycle aromatique ou hétéroaromatique, éventuellement substitué, à 5 ou 6 chaînons.

12. Composition d'adhésif thermofusible réactive à l'humidité selon l'une quelconque des revendications précédentes, **caractérisée en ce que** la polyaldimine **ALD** correspond à la formule (I a).

13. Composition d'adhésif thermofusible réactive à l'humidité selon l'une quelconque des revendications précédentes, **caractérisée en ce que** l'acide **K** est un acide monocarboxylique aromatique, en particulier l'acide benzoïque, l'acide salicylique ou l'acide 2-nitrobenzoïque.

14. Composition d'adhésif thermofusible réactive à l'humidité selon l'une quelconque des revendications précédentes, **caractérisée en ce que** l'acide **K** est présent en une quantité de 0,001 à 5 % en poids, de préférence de 0,005 à 2 % en poids, par rapport à la composition d'adhésif thermofusible totale.

15. Composition d'adhésif thermofusible réactive à l'humidité selon l'une quelconque des revendications précédentes, **caractérisée en ce que** la composition d'adhésif thermofusible est exempte de charges, en particulier exempte de noir de carbone.

16. Composition d'adhésif thermofusible réactive à l'humidité selon l'une quelconque des revendications précédentes, **caractérisée en ce que** le polymère polyuréthanne **P** est amorphe.

17. Procédé pour le collage d'un support **S1** et d'un support **S2,** comprenant les étapes
i) chauffage de la composition d'adhésif thermofusible réactive à l'humidité selon l'une quelconque des revendications 1 à 16, à une température comprise entre 80 °C et 200 °C, en particulier entre 120 °C et 160°C ;
ii) application de la composition chauffée sur un support **S1 ;**
iii) mise en contact de la composition appliquée avec un support **S2 ;**
le support S2 étant constitué du même matériau que le substrat S1 ou d'un matériau différent de celui-ci.

18. Procédé pour le collage selon la revendication 17, **caractérisé en ce qu'**à l'étape iii) fait suite une étape iv) de la réticulation chimique de la composition avec l'humidité.

19. Procédé pour le collage selon la revendication 17 ou 18, **caractérisé en ce que** le support **S1** et/ou le support **S2** est/sont une matière plastique, un matériau organique tel que le cuir, un tissu, le papier, le bois, un matériau dérivé du bois associé à une résine, un matériau composite textile-résine, le verre, la porcelaine, la céramique ou un métal ou un alliage métallique, en particulier un métal ou un alliage métallique peint ou revêtu de poudre.

20. Procédé pour le collage selon la revendication 17 ou 18 ou 19, **caractérisé en ce que** le support **S1** et/ou le support **S2** est/sont un matériau transparent, en particulier un film en matière plastique transparent ou un verre.

21. Procédé pour le collage selon l'une quelconque des revendications 17 à 20, **caractérisé en ce que** l'épaisseur de l'adhésif dans le collage est ≥ 10 micromètres, en particulier est comprise entre 10 micromètres et 2 millimètres, plus particulièrement entre 80 micromètres et 500 micromètres.

22. Article, qui a été collé conformément à un procédé pour le collage selon l'une quelconque des revendications 17 à 21.

23. Article selon la revendication 22, **caractérisé en ce que** l'article est un article du secteur des moyens de transport, du meuble, des textiles ou de l'emballage.

24. Procédé pour la réduction du cloquage et pour l'accélération de la réticulation chimique de compositions d'adhésifs thermofusibles réactives à l'humidité, amorphes, en particulier transparentes, par addition à au moins un polymère polyuréthanne **P** amorphe,
tel qu'il a été décrit dans une composition d'adhésif thermofusible réactive à l'humidité selon l'une quelconque des revendications 1 à 16,
d'au moins un polyaldimine **ALD** de formule (I a) ou (I b),
telle qu'elle a été décrite dans une composition d'adhésif thermofusible réactive à l'humidité selon l'une quelconque des revendications 1 à 16,
et d'au moins un acide **K** sous forme d'un acide monocarboxylique ou dicarboxylique ou d'un acide monosulfonique ou disulfonique organique ou d'un composé hydrolysable en l'un de ces acides,
tel qu'il a été décrit dans une composition d'adhésif thermofusible réactive à l'humidité selon l'une quelconque des revendications 1 à 16.
